(19) Europäisches Patentamt
European Patent Office
Office européen des brevets

(11) **EP 4 139 789 B1**

(12) **EUROPEAN PATENT SPECIFICATION**

(45) Date of publication and mention of the grant of the patent:
**07.02.2024 Bulletin 2024/06**

(21) Application number: **20727398.8**

(22) Date of filing: **24.04.2020**

(51) International Patent Classification (IPC):
**G06F 7/58** $^{(2006.01)}$

(52) Cooperative Patent Classification (CPC):
**G06F 7/588**

(86) International application number:
**PCT/PL2020/050032**

(87) International publication number:
**WO 2021/215941 (28.10.2021 Gazette 2021/43)**

(54) **METHOD FOR QUANTUM GENERATION OF RANDOM NUMBERS ESPECIALLY IN LOTTERIES AND GAMING AND DEVICE FOR QUANTUM GENERATION OF RANDOM NUMBERS**

VERFAHREN ZUR QUANTENERZEUGUNG VON ZUFALLSZAHLEN; INSBESONDERE BEI LOTTERIEN UND SPIELEN, UND VORRICHTUNG ZUR QUANTENERZEUGUNG VON ZUFALLSZAHLEN

PROCÉDÉ DE GÉNÉRATION QUANTIQUE DE NOMBRES ALÉATOIRES NOTAMMENT DANS DES LOTERIES ET DES JEUX VIDÉO ET DISPOSITIF DE GÉNÉRATION QUANTIQUE DE NOMBRES ALÉATOIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietors:
• **Uniwersytet Gdanski**
**80-309 Gdansk (PL)**
• **Universidad De Concepcion**
**Concepción (CL)**

(72) Inventors:
• **PAWLOWSKI, Marcin**
**81-461 Gdynia (PL)**
• **DE AQUINO MOREIRA LIMA, Gustavo**
**San Pedro de la Paz Concepción (CL)**

(74) Representative: **Pawlowska, Justyna**
**Kancelaria Patentowa Justyna Pawlowska**
**Wzgorze Bernardowo 263B/6**
**81-583 Gdynia (PL)**

(56) References cited:
**US-A1- 2015 227 343     US-A1- 2019 393 675**

EP 4 139 789 B1

**Description**

The presented invention relates to a new method and device for the quantum generation of random numbers. The invention can be implemented in generation of random numbers in lotteries and gaming. The invention allows generation of binary or non-binary random number chains with high generation rates.

The existence of random processes, in addition to having philosophical consequences, has application in various disciplines of technology. Random numbers are essential in lottery and gaming industry as well as for scientific simulations. The standard measure of the quality of randomness generated is called min-entropy and is related to the probability of guessing a number of the sequence generated before it is announced. A good random number generator should be able to produce a bit string with a high entropy at a high rates.

In general, random number generators can be divided into two categories: pseudorandom number generators (PRNGS) and true random number generators (TRNGs). The PRNG are based on complex mathematical algorithms that simulate randomness generation what is disclosed in Gentle JE (2003), Random Number Generation and Monte Carlo Methods, Springer. In this case, the privacy or unpredictability of random numbers is not guaranteed and depends on additional considerations what is disclosed in CH Vincent, "The generation of truly random binary numbers," J. Physics E, vol. 3) No. 6, pp. 594-598, 1970.

For example, if the seed of the algorithms is known to an adversary, the numbers generated will not be private - Barker E., Kelsey J., Recommendation for Random Number Generation Using Deterministic Random Bit Generators, NIST SP800-90A, January 2012. Other problems related to the implementation of the algorithm also can compromise privacy - L. Bello. "Openssl - predictable random number generator". Debian Security Advisory, 1571-1, 2008, such as its periodicity or lack of uniformity.

On the other hand, TRNGs are based on one or more physical processes whose results are unpredictable. Some types of TRNGs are the LavaRnd (www.lavamd.org), which digitizes a chaotic light source with a CCD chip, and the Araneus Alea II (www.araneus.fi/products/alea2/en/), which uses a reverse biased semiconductor junction to generate white Gaussian noise. Random numbers can also be generated by exploring random phenomena of nature, such as radioactive decay (www.fourmilab.ch/hotbits/), or atmospheric noise (www.random.org). Another option are quantum random number generators (QRGNs) based on the intrinsic uncertainty of the measurement processes of quantum systems what is disclosed e.g. in EP1821196.

In all these cases the private randomness or unpredictability of the numbers generated is based on theoretical models that guarantee the security of the generator, considering its operation free of anomalies, failures or malicious attacks. In practice, regularities in the numbers generated arise as a result of the inevitable use of non-ideal components in non-ideal conditions or periodic disturbances intrinsic to the system, such as: temperature fluctuations, human activity, component wear, among others. For this reason the sequence of random numbers generated must be certified in order to guarantee the operation of a generator that meets the desired quality. Statistical tests of randomness have been created (DieHarder, NIST STS 2.1.2), that look for different types of correlations between the numbers generated. Unfortunately, these tests cannot guarantee the unconditional security of a device what is disclosed in Darren Hurley-Smith and Julio Hernandez-Castro. "Quam Bene Non Quantum: Bias in a Family of Quantum Random Number Generators." School of Computing, University of Kent, Canterbury CT2 7NF, Kent, UK.

However, there are setups where it is possible for a random number generator to self-certify, that is, to analyse itself continuously during its operation, in order to guarantee unconditional security. In this direction, different proposals have emerged for what is known today as "device-independent QRNGs " ( DI-QRNGs ) - e.g. Davide Rusca , Thomas van Himbeeck , Anthony Martin, Jonatan Bohr Brask , Weixu Shi, Stefano Pironio , Nicolas Brunner, Hugo Zbinden . "Practical self-testing quantum random number generator based on an energy bound". arXiv: 1904.04819, 2019. The DI-QRNGs proposed so far are not practical because they are based on complex protocols of quantum information, known as Bell tests, disclosed in Anatoly Kulikov, Markus Jerger , Anton Potocnik , Andreas Wallraff , and Arkady Fedorov . "Realization of a Quantum Random Generator Certified with the Kochen-Specker Theorem." Phys. Rev. Lett. 119, 240501, 2017, and require entangled particles. In these cases, the user can certify the generation of true random numbers. Specifically, the amount of min-entropy generated by the system can be estimated directly from the observed data. In this way, the generator self-certifies in real time the randomness or unpredictability of the numbers generated and, therefore, there is no need to perform statistical tests on the generated bit sequence. Unfortunately, in practice, DI-QRNGs require complex, bulky and very expensive hardware and even with it randomness generation has only been achieved at very low rates - Davide G. Marangon, Giuseppe Vallone, and Paolo Villoresi. "Source-Device-Independent Ultrafast Quantum Random Number Generation." Phys. Rev. Lett. 118, 060503, 2017, severely limiting applications.

In EP 1447740 a microprocessor including a random number generator RNG that performs a self-test on reset and selectively enables/disables itself based on the self-test results is disclosed. The RNG includes a self-test unit that performs the self-test to determine whether the RNG is functioning properly in response to either a power-up or warm reset. If the self-test fails, the microprocessor disables the RNG. Disabling the RNG may include returning extended function information indicating the RNG is not present in response to execution of a CPUID instruction. Disabling the RNG may include generating a general protection fault in response to execution of a RDMSR or WRMSR instruction specifying an MSR associated with the RNG. Disabling the RNG may include generating an invalid opcode fault in response to execution of an instruction that attempts to obtain random numbers from the RNG. It is a device which self-tests itself at start-up. However, not entropy but some basic characteristics of the device are tested. Moreover it is not a device based on quantum mechanics but based on classical physics and therefore the self-test procedure is not very precise.

EP 3040853 describes a random number generator (1, 1000) that includes means to measure two continuous observables of an electromagnetic field prepared in a quantum state, and conversion means to obtain, by the measure of each observable, a first and a second sequence of bits. A processing unit calculates the conditional min-entropy of the random variable associated with the first sequence. A unit of post-processing extracts a third sequence of random bits whose length depends on the conditional min-entropy of the first sequence. The output of the post-processing unit is therefore a set of random bits that can be inserted in a data signal, such as a signal that carries a cryptographic key. The invention is also related to a method for generating random numbers. This device is a quantum one but does not perform self-testing. It estimates the entropy of its outcomes but it is only based on the probability distribution of the output but not the conditional probability of outputs and inputs.

In US 2015/227343 it is described a system and method for generating random numbers. The system may include a random number generator (RNG), such as a quantum random number generator (QRNG) configured to self-correct or adapt in order to substantially achieve randomness from the output of the RNG. By adapting, the RNG may generate a random number that may be considered random regardless of whether the random number itself is tested as such. As an example, the RNG may include components to monitor one or more characteristics of the RNG during operation, and may use the monitored characteristics as a basis for adapting, or self-correcting, to provide a random number according to one or more performance criteria. This device has input and output parameters but it does not use it to estimate entropy but the efficiency of its operation (according to unspecified criteria) and modifies its input to maximize it. Our device cannot choose its own inputs.

In WO 2018/065593 a device that performs self-certification of randomness is mentioned, but it has a source which needs to produce one of the two possible states with a well-defined overlap.

In US2019/393675 a method for quantum number generation of string of random numbers and an apparatus e.g. a self-testing quantum number generator is disclosed. The apparatus comprising a light source emitting pulses of light with random or minimally correlated phases, a beam splitter to receive the input signal and the light source, a differencing circuit to subtract signals from first and second outputs of the beam splitter (homodyne detector), and a processing circuit to estimate a minimum entropy value of the input signal from the output of the differencing circuit. The input signal may be quantum vacuum states of the electromagnetic field. Quadrature values of the input quantum states may be processed with a randomness extractor algorithm and output from the processing unit.. Accordingly, there is still need for a technological solution which allows to obtain random numbers with a self-testable unpredictability for the generated stream.

The goal of the invention was to provide the generator and methods that enable to generate unpredictable string of numbers at high rates, characterized by high entropy which can be self-tested in real time.

The invention is based on physical processes for the generation and detection of quantum states which final result is intrinsically random. Of particular importance is that the invention self-test itself, i.e.: allows the real-time certification of the randomness it generates. In this way the correct functioning of the equipment is always corroborated, and the security of the numbers generated is not conditioned on the implementation of subsequent statistical tests. The scheme is easy to implement, efficient in extracting the final sequence of random numbers, robust against imperfections of the device components, and allows the generation of binary or non-binary random number chains with high generation rates.

The invention - present method and technological device propose a fairly practical quantum true random number generator, which is self-certifiable in real time. The device's operation is based on the active manipulation of interferometers. This technology offers in particular ease of implementation, which only requires standard components, easily commercially available that can be integrated to build the device. In this way, a reduced integrated system of lower cost and less complex than the existing ones is proposed. The device offers high rates of randomness generation (of the order of Mbit/s). Another advantage is that the min-entropy of the random bits generated is calculated and monitored in real time, unlike in most existing solutions.

The essential difference of the invention in compared to state of the art is that it constantly monitors the entropy of the generated randomness with a method that does not require a characterized quantum state source nor measurements with characterized devices. In the invention, a self-testing number generator comprises a signal source configured to produce a signal, components A that modify the signal properties. The control unit changes parameters A and modify the signal's properties in order to operate the quantum number generator with a maximum entropy. This invention has a wide scope of applicability in lottery and gaming industry because it guarantees robustness against imperfections of all the components the random number generating device consists of. Any initial problem or tampering with its components will be detected at start-up and any malfunction or wear during device's operation. Accordingly if the results obtained will not be random numbers, the measured entropy will be 0 what will be detected by the invention.

The invention is described in details in examples and drawings:

Fig. 1 - a standard multipath interferometer;

Fig.2a - device based on an interferometer modified by the addition of extra signal modification components and detectors;

Fig. 2b - device based on an interferometer modified by the addition of extra signal modification components;

Fig. 2c - device based on an unmodified interferometer;

Fig. 3 - particular embodiment of the invention - application in lottery and gaming;

Fig. 4 - schematic of the control unit CU present in figures 2a, 2b and 2c.

General example.

a) System - generator

Introduction

The device consists of two main parts: (a) interferometer; and (b) control unit CU. The interferometer is a well-known apparatus, which is described in the next paragraph. The interferometer constituting part of the device can be modified by placing additional components. The control unit governs the work of the interferometer and self-tests the quality of randomness produced by the interferometer. The self-test is performed by computing a lower bound on min-entropy of the output sting of numbers.

Interferometer

An interferometer is a device that is used to measure interference properties of waves in a form of signal. In Fig. (1), a schematic diagram of an interferometer is presented.

The interferometer has a signal that comes from a source (S) and consists of $n$ paths. The signals can be modified according to the parameters$(x_1, ... , x_n)$ in the control components $A_1, ... , A_n$. The interference takes part in the interference region (I) and then the signals are measured at the detection stations ($D_1, ... , D_m$). The number of detectors m usually is but does not have to be equal to the number of paths.

The initial signal in the form of a wave is emitted from a source S and travels along two or more paths. The signal can be anything with interference properties, e.g. particles, electric current, light or acoustic waves. In each path, the signals can be modified independently, to change its properties in the components denoted by $A_1, ... , A_n$, according to the configuration of their input parameters ($x_1, ... , x_n$). Then the signals interfere in the interference region I - region indicated in Fig. (1). After leaving interference region I, the signals are measured at the stations denoted by ($D_1, ... , D_m$), which represent the detectors. The number of stations m can but does not have to be equal to the number of paths $n$. The joint probability distribution of the measurement results at the detection stations $p(D_1, ... , D_m)$, is measured as a function of the input parameters ($x_1, ... , x_n$), in order to establish the signal interference properties.

Underlying idea

The described invention is based on the interferometer presented in the previous paragraph and control unit connected to it. The main idea of this invention is based on the fact that for some combination of input parameters ($x_1, ..., x_n$) from a control unit CU, the outcomes of the detection stations should be deterministic and for other completely random, if the device works correctly. Checking for deviations and estimating their magnitude when we expect the determinism allows us to quantify the current quality of the device and randomness it produces. The outcomes of the device are random in a way which admits self-testing only if the behaviour of the device can be modelled by quantum theory (not any classical one).

Construction of the device

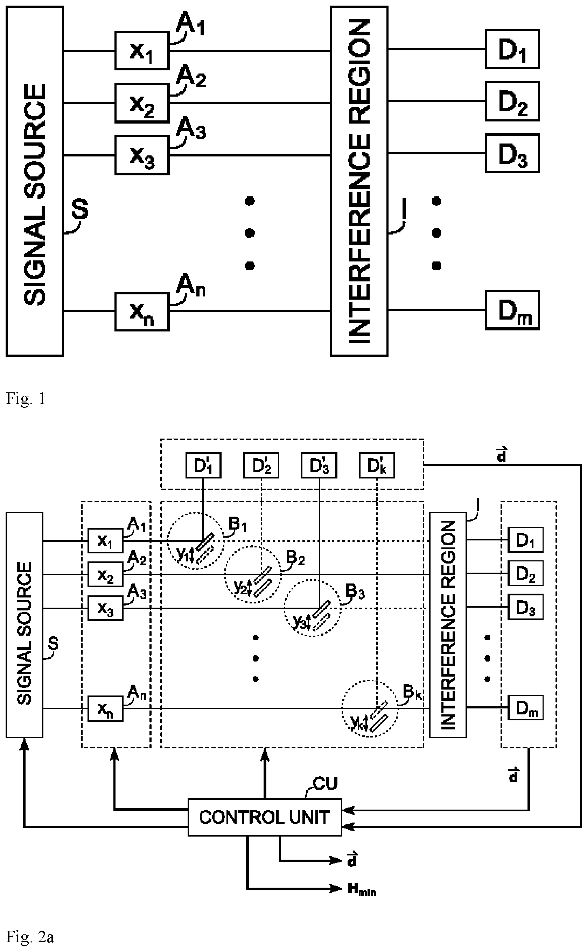

The device comprises interferometer and control unit CU, which is presented in Fig.2a-2c.

The interferometer can be kept unchanged as in Fig. (1) or modified by addition of extra components on some or all of the paths. The additional components denoted by $B_1, ... , B_k$, get their own inputs $(y_1, ... , y_k)$ from a control unit CU as in Fig. (2a) or can involve additional detection stations $(D'_1, ... , D'_k)$ as in Fig. (2b). The control unit CU can take a form of an FPGA or ASIC microprocessor, with auxiliary known electronics if necessary.

The source of the signal, basic components of the interferometer $(x_1, ... , x_n)$, optional ones $(y_1, ... , y_k)$, the detectors $(D_1, ... , D_m)$ and, additional detection stations $(D'_1, ... , D'_k)$ if they exist, are controlled by a control unit CU. $\vec{d}$ stands for the messages from the detectors $(D_1, ... , D_m)$ and, if they exist, $(D'_1, ... , D'_k)$ to CU and $\vec{x}$ for all the inputs - parameters $(x_1, ..., x_n)$ and, if additional parameters if they exist, $(y_1, ... , y_k)$. The control unit CU itself has four main components: timer T, hardware driver HD , memory M and computing processor CP, all communicating via electrical wires.

According to the fig.2a - in the device a signal comes from a source (S) and travels along $n$ paths. The signals is modified according to the parameters $(x_1, ..., x_n)$ in the control CU components $A_1, ... , A_n$. On some of the paths there are additional components $B_1, ... , B_k$, with their own parameters $(y_1, ..., y_k)$. Based on the value of $y_i$ on $i$-th path the signal either continues on its path or is redirected to one of the additional detectors $D'_1, ... , D'_k$. The signals that stayed on their paths interfere in the interference region (I) and are later measured at the stations $D_1, ... , D_m$. A control unit CU in a form of FPGA or ASIC which controls the rest of the device has a timer which divides device's operation into steps. In each step CU causes the signal source (S) to send the signals, generates inputs $(x_1, ..., x_n)$ and $(y_1, ... , y_k)$, which are communicated by electrical wires to components $A_1, ..., A_n$ and $B_1, ... , B_k$. In each step all the detectors $D_1, ... , D_m$ and $D'_1, ... , D'_k$ measure incoming signals and send via electrical wires the measurement results $\vec{d}$ to CU. In each step CU sends $\vec{d}$ and min-entropy estimate $H_{min}$ for that step to the user.

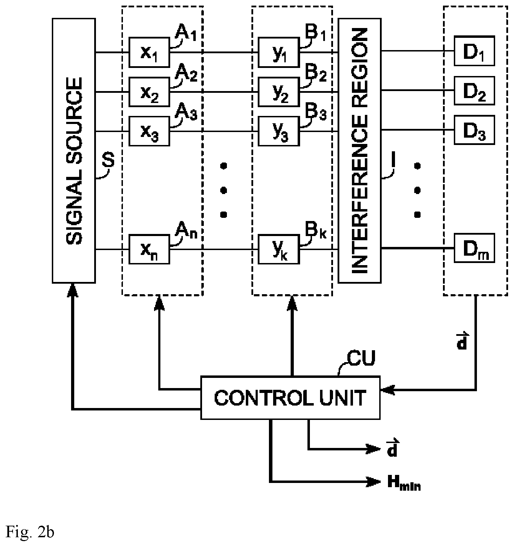

As is presented in the figure 2b, in the device a signal comes from a source (S) and travels along $n$ paths. The signals can be modified according to the parameters $(x_1, ..., x_n)$ in the control components $A_1, ... , A_n$. On some of the paths there are additional components $B_1, ... , B_k$, with their own parameters $(y_1, ... , y_k)$. The signals pass through both sets of components. The interference takes part in the interference region and then the signals are measured at the detection stations $D_1, ... , D_m$. The control unit CU in a form of FPGA or ASIC which controls the rest of the device has a timer which divides device's operation into steps. In each step CU causes the signal source (S) to send the signals, generates inputs $(x_1, ... , x_n)$ and $(y_1, ... , y_k)$, which are communicated by electrical wires to components $A_1, ... , A_n$ and $B_1, ... , B_k$. In each step all the detectors $D_1, ... , D_m$ measure incoming signals and send via electrical wires the measurement results $\vec{d}$ to CU. In each step CU sends $\vec{d}$ and min-entropy estimate $H_{min}$ for that step to the user.

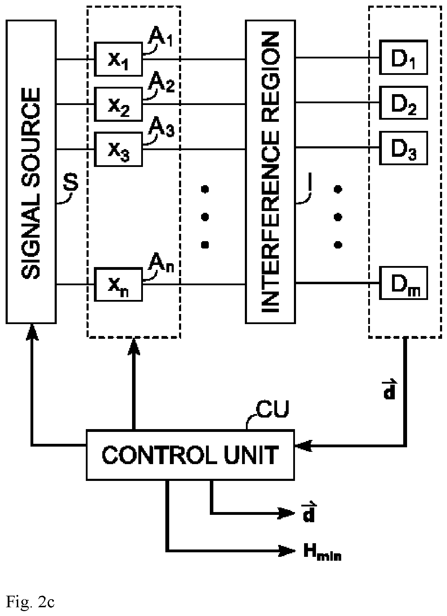

As is presented in the figure 2c, in the device a signal comes from a source (S) and travels along $n$ paths. The signals can be modified according to the parameters $(x_1, ..., x_n)$ in the control components $A_1, ... , A_n$. The interference takes part in the interference region and then the signals are measured at the detection stations $D_1, ... , D_m$. The control unit CU in a form of FPGA or ASIC which controls the rest of the device has a timer which divides device's operation into steps. In each step CU causes the signal source (S) to send the signals, generates inputs $(x_1, ..., x_n)$ which are communicated by electrical wires to components $A_1, ... , A_n$. In each step all the detectors $D_1, ... , D_m$ measure incoming signals and send via electrical wires the measurement results $\vec{d}$ to CU. In each step CU sends $\vec{d}$ and min-entropy estimate $H_{min}$ for that step to the user.

Method

Generation of randomness

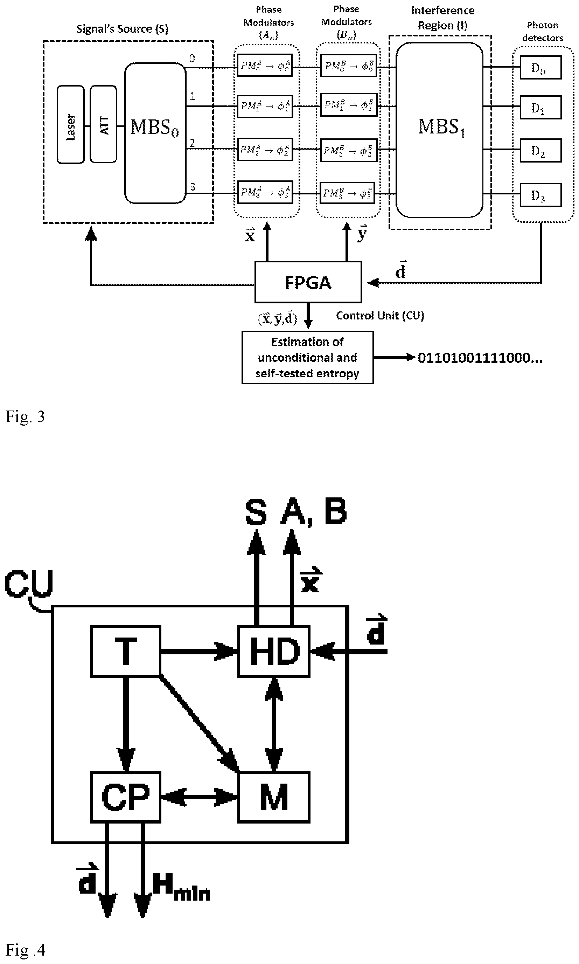

The control unit's CU internal structure is shown in Fig.4. CU works in steps. Each step begins by timer T sending a signal to the hardware driver HD notifying it that the new step has started. Then the hardware driver HD retrieves random variable $\vec{x}$ from memory M. Next the hardware driver HD transmits $\vec{x}$ to components $A_1, ... , A_n$ and $B_1, ... , B_k$ and commands the source S to send the signal. After the signal has been measured by the detectors $(D_1, ..., D_m)$ and, if they exist, $(D'_1, ..., D'_k)$, they send $\vec{d}$ to the hardware driver HD, which passes it to memory M. Next the computing processor CP retrieves the set of $\vec{d}$ and $\vec{x}$ from memory M and from them the result of self-test, which is a lower bound on min-entropy $H_{min}(\vec{d}|\vec{x})$ of $\vec{d}$ is computed. It is a standard measure of randomness quality in information theory. The method used by CP to compute $H_{min}(\vec{d}|\vec{x})$ is described in the next section. The step ends with CP transmitting

$\vec{d}$ and $H_{min}(\vec{d}|\vec{x})$ to the user. $\vec{d}$ is a random number generated in this step and $H_{min}(\vec{d}|\vec{x})$ the result of self-test.

CP also uses randomness extractor (a well-known mathematical function) to obtain from $\vec{d}$ the value of $\vec{x}$ which is sent to memory M and will be used for the settings of components $A_1, ... , A_n$ and $B_1, ... , B_k$ in the next step.

Self-testing. Part 1: Estimation of probability distribution $p(\vec{d}|\vec{x})$

The method used to establish and update $H_{min}(\vec{d}|\vec{x})$ based on $\vec{d}$ and $\vec{x}$ works in the following way:
The control unit CU stores in its memory M values of $\vec{d}$ and $\vec{x}$ for the last $N_0$ steps. $N_0$ is a free parameter chosen by the user. In each step next pair of $\vec{d}$ and $\vec{x}$ is added and the one which is in memory for longest removed. The current content of the memory is a list of pairs $(\vec{d}_i, \vec{x}_i)$, $i = 1, ..., N_0$ and the value of $\vec{x}$ for the next step. The value of $H_{min}(\vec{d}|\vec{x})$ returned in any given step is then a lower bound on the average min-entropy of $\vec{d}$ for the block of last $N_0$ steps.

First conditional probability distribution $p(\vec{d}|\vec{x})$ of $\vec{d}$ as a function of $\vec{x}$ is estimated by the control unit CU. It is taken to be equal to the frequency of any given value of $\vec{d}$ for any particular $\vec{x}$ in the block of the last $N_0$ steps and given by the formula:

$$p(\vec{d}|\vec{x}) = \frac{\sum_{i=1}^{N_0} \delta(\vec{d}, \vec{d}_i)\delta(\vec{x}, \vec{x}_i)}{\sum_{i=1}^{N_0} \delta(\vec{x}, \vec{x}_i)},$$

where $\delta(a, b)$ is Kronecker's function equal to 1 if $a = b$ and 0 otherwise.

Self-testing. Part 2: Estimation of min-entropy $H_{min}(\vec{d}|\vec{x})$

It will call $p(\vec{d}|\vec{x})$ an observed probability distribution and assume it to arise from underlying probabilities $p_\gamma(\vec{d}|\vec{x}, \vec{\lambda})$. There are two kinds of parameters here to which we don't have a direct access:

- $\gamma$ denotes properties of the interferometric setup such as losses in different paths or the characteristics of interference region I. While they can evolve in time they do so slowly enough for us to assume that $\gamma$ is constant in the whole block of last $N_0$ steps.
- $\vec{\lambda}$ on the other hand, represents parameters that can change in every step of operation of the device. Such a quick change of parameters can only appear in electronic circuits controlling the behaviour of the signal source S and detectors ($D_1, ..., D_m$) and, if they exist, ($D'_1, ... , D'_k$). Therefore, we use notation $\vec{\lambda} = (\lambda_0, \lambda_1, ... , \lambda_D)$, where $D$ is the total number of detectors equal to $m$ for the case in Fig. (2a) or $m + k$ for the one in Fig. (2b). $\lambda_0$ is a parameter related to the signal source and $\lambda_i$ is related to detector $D_i$.

The control unit CU stores in its memory a finite set of pairs $p_\gamma(\vec{d}|\vec{x}, \vec{\lambda})$ and $H_\gamma(\vec{d}|\vec{x}, \vec{\lambda})$, which were calculated previously by modelling the behaviour of the device as a function of $\gamma$ and $\vec{\lambda}$. The exact parametrization of the device by $\gamma$ and $\vec{\lambda}$ and their ranges depend on the choice of the security paradigm. For example in order to model the device we may assume that there are no rapid changes in the parameters of the device and $\vec{\lambda}$ is constant, or that signal source produces always single photons. The device can store more than one set and the user can switch between different paradigms trading level of security for higher randomness generation rates. To make the set of pairs $p_\gamma(\vec{d}|\vec{x}, \vec{\lambda})$ and $H_\gamma(\vec{d}|\vec{x}, \vec{\lambda})$ finite the parameters $\gamma$ and $\vec{\lambda}$ may need to be coarse-grained. Then for every value of $\gamma$ and $\vec{\lambda}$ $p_\gamma(\vec{d}|\vec{x}, \vec{\lambda})$ is calculated. Then $H_\gamma(\vec{d}|\vec{x}, \vec{\lambda})$ is taken to be the minimal min-entropy of probabilities $p_\Gamma(\vec{d}|\vec{x}, \vec{\Lambda})$, where $\Gamma$ and $\vec{\Lambda}$ denote sets of values which, when coarse-grained, yield $\gamma$ and $\vec{\lambda}$ respectively, i.e.:

$$H_\gamma(\vec{d}|\vec{x}, \vec{\lambda}) = \min_{\Gamma, \Lambda}(-\log\max_{\vec{k}} p_\Gamma(\vec{d} = \vec{k}|\vec{x}, \vec{\Lambda})).$$

Let us denote the probability distribution of $\vec{\lambda}$ as $p(\vec{\lambda})$. Then the min-entropy of potential adversary for a particular value of $\gamma$ is lower bounded by

$$H_\gamma(\vec{d}|\vec{x}) = \sum_{\vec{\lambda}} p(\vec{\lambda}) H_\gamma(\vec{d}|\vec{x}, \vec{\lambda}) \quad (*).$$

The observed probability distribution for a particular value of $\gamma$ is then

$$p_\gamma(\vec{d}|\vec{x}) = \Sigma_{\vec{\lambda}}\, p(\vec{\lambda})\, p_\gamma(\vec{d}|\vec{x},\vec{\lambda}).$$

Now the control unit CU can perform linear programming to find minimum of (*) under the constraint that $|p_\gamma(\vec{d}|\vec{x}) - p(\vec{d}|\vec{x})| < \varepsilon$, where $\varepsilon$ is a constant implied by coarse-graining chosen. The meaning of this constraint is that the linear program is trying to find lowest min-entropy $H_\chi(\vec{d}|\vec{x})$ compatible with the observed probability distribution. After solving the linear program for all values of $\gamma$ the lower bound on $H_{min}(\vec{d}|\vec{x})$ is taken to be minimum over all values of $\gamma$, i.e. $H_{min}(\vec{d}|\vec{x}) = \min_\gamma H_\chi(\vec{d}|\vec{x})$.

Example 2

Description of the preferred embodiment of the invention

The preferred embodiment of the invention (shown in Fig. (3)), is based on a four-arm Mach-Zehnder interferometer built with modern fiber optic technology.

The user of the device is a lottery, which needs random numbers of the results of a draw. It starts the procedure of obtaining them by giving a signal to the control unit CU of the device to produce the numbers.

The role of the control unit CU is played by a field-programmable gate array (FPGA) electronic unit. It contains all the necessary elements of the control unit CU: Memory M, Timer T, Hardware Driver HD and Computing Processor CP. The FPGA unit controls and synchronises the signal source S, signal modifying components A and B and detectors D.

After the light is emitted from the laser optical attenuators are then used to reduce initial signal intensity. The attenuators set the average number of photons per pulse to $\mu = 0.2$. In this case, the source can be seen as a good approximation of a nondeterministic source of single photons. We use standard ket notation of quantum information and describe the state of light after a single photon is generated by $|\chi_0\rangle = |0\rangle$.

After the attenuators, the signal is split into four paths using $4 \times 4$ multi-port beam splitter unit (MBS$_0$). This unit consists of a commercial demultiplexer (DEMUX) device, with 1 fiber as an input and 4 independent fibres as an output. It implements a 4-dimensional Hadamard gate operation:

$$U_H = \frac{1}{2}\begin{bmatrix} 1 & 1 & 1 & 1 \\ 1 & 1 & -1 & -1 \\ 1 & -1 & 1 & -1 \\ 1 & -1 & -1 & 1 \end{bmatrix}.$$

The quantum state of light after it leaves the source is

$$|\chi_1\rangle = \frac{1}{2}(|0\rangle + |1\rangle + |2\rangle + |3\rangle),$$

where $|k\rangle$ is the mode representing the photon in the k-th path.

The device follows the schematics from Fig. 2b. The role of components $A_1, ... , A_4$ is played by phase modulators (PM) connected to each of - fibers - leaving MBS$_0$. The role of parameters $(x_1, ..., x_4)$, is played by phases $\phi_0^A, \phi_1^A, \phi_2^A, \phi_3^A$. The FPGA controls $\phi_0^A, \phi_1^A, \phi_2^A, \phi_3^A$ by applying different voltages to the drivers of PMs. After passing through components $A_1, ... , A_4$ the state of light becomes

$$|\chi_2\rangle = \frac{1}{2}\left(e^{i\phi_0^A}|0\rangle + e^{i\phi_1^A}|1\rangle + e^{i\phi_2^A}|2\rangle + e^{i\phi_3^A}|3\rangle\right),$$

The role of components $B_1, ... , B_4$ is played by another set of - phase modulators (PM) connected to each of - fibers. The role of parameters $(y_1, ... , y_4)$, is played by phases $\phi_0^B, \phi_1^B, \phi_2^B, \phi_3^B$. The FPGA controls

$\phi_0^B, \phi_1^B, \phi_2^B, \phi_3^B$ by applying different voltages to the drivers of PMs. After passing through components $B_1, \ldots, B_4$ the state of light becomes

$$|\chi_3\rangle = \frac{1}{2}\left(e^{i(\phi_0^A+\phi_0^B)}|0\rangle + e^{i(\phi_1^A+\phi_1^B)}|1\rangle + e^{i(\phi_2^A+\phi_2^B)}|2\rangle + e^{i(\phi_3^A+\phi_3^B)}|3\rangle\right),$$

The role of the interference region I is played by another $4 \times 4$ multi-port beam splitter unit (MBS$_1$) build in the same way as (MBS$_0$) and performing the same transformation. After that, the state of light becomes

$$|\chi_4\rangle = \frac{1}{2}\left(\left[e^{i(\phi_0^A+\phi_0^B)} + e^{i(\phi_1^A+\phi_1^B)} + e^{i(\phi_2^A+\phi_2^B)} + e^{i(\phi_3^A+\phi_3^B)}\right]|0\rangle + \left[e^{i(\phi_0^A+\phi_0^B)} +\right.\right.$$

$$e^{i(\phi_1^A+\phi_1^B)} - e^{i(\phi_2^A+\phi_2^B)} - e^{i(\phi_3^A+\phi_3^B)}\right]|1\rangle + \left[e^{i(\phi_0^A+\phi_0^B)} - e^{i(\phi_1^A+\phi_1^B)} + e^{i(\phi_2^A+\phi_2^B)} -\right.$$

$$\left.\left. e^{i(\phi_3^A+\phi_3^B)}\right]|2\rangle + \left[e^{i(\phi_0^A+\phi_0^B)} - e^{i(\phi_1^A+\phi_1^B)} - e^{i(\phi_2^A+\phi_2^B)} + e^{i(\phi_3^A+\phi_3^B)}\right]|3\rangle\right).$$

Then the light is measured by the detectors. Photons in mode $|0\rangle$ are measured by the detector $D_1$, those in 11) are measured by the detector $D_2$, those in 12) are measured by the detector $D_3$, and those in 13) are measured by the detector $D_4$. The detectors are triggered commercial InGaAs single-photon avalanche detectors.

The detectors send the measurement outcomes to FPGA which estimates min-entropy $H_{min}(\vec{d}|\vec{x})$. The FPGA pots-process $\vec{d}$ with well-known method of randomness extraction, which takes as an input $\vec{d}$ and $H_{min}(\vec{d}|\vec{x})$, and produces a sting of random numbers with arbitrary quality $\vec{r}$. Next FPGA returns $\vec{r}$ to the user which can use the numbers in $\vec{r}$ for the results of the lottery draw.

## Claims

1. A self-testing quantum number generator especially in lotteries and gaming comprising:

    - an interferometer, comprising:

        - a signal source S configured to produce a signal,
        - at least two paths through which the signal travels,
        - components A that can modify the signal's properties,
        - an interference region I,
        - detectors $D$,

    - a control unit CU, wherein
    - the control unit CU is connected to the signal source S, the signal having an interference property,
    - **characterized in that** detectors D are configured to measure a signal intensity and send measurement results $\vec{d}$, via electrical wires to the control unit CU,
    - components $A$ are controlled by the control unit CU via electrical wires with parameters $\vec{x}$,
    - the source S is configured to produce a signal when requested by the control unit CU via electrical wires,
    - the control unit CU performs a self-test based on the measurement results $\vec{d}$ and returns its outcome $H_{min}(\vec{d}|\vec{x})$,

    the control unit CU returns random numbers $\vec{d}$, where: $\vec{x}$ is a vector representing the parameters for all components $A$, $\vec{d}$ is a vector representing the measurement results of the detectors D, $H_{min}(\vec{d}|\vec{x})$ is a lower bound on average min-entropy of the string of $N_0$ values of $\vec{d}$, given by formula $H_{min}(\vec{d}|\vec{x}) = -log_2 max_{\vec{k}} p(\vec{d} = \vec{k}|\vec{x})$ and $N_0$ is a free parameter.

2. The self-testing quantum number generator according to claim 1, comprising an interferometer of any design modified by addition of additional components B

3. The self-testing quantum number generator according to claim 1, comprising an interferometer of any design modified by addition of additional components B and additional detectors D'

4. The self-testing quantum number generator, according to claim 1, comprising a Mach-Zehnder interferometer, modified by addition of additional components B.

5. The self-testing quantum number generator, according to claim 1, comprising a Mach-Zehnder interferometer, modified by addition of additional components B and detectors D'.

6. The self-testing quantum number generator , according to claim 1, wherein the inputs $\vec{x}$ are generated by the control unit CU from the randomness generated previously or the control unit CU receives it as an input from external source.

7. A method for self-testing quantum number generation of string of random numbers in generator, especially in lotteries and gaming a, comprising steps of:

- a) requesting by a control unit CU from signal source S a signal having and interference property to be produced,
- b) sending by the control unit CU parameters $\vec{x}$ to components A that modify the signal's properties
- c) transferring the signal from the source S, via components A , to interference region I and detectors D, whereby the signal travels through at least two paths,
- d) measuring the signal intensities by the detectors D and sending results of the measurement $\vec{d}$ to the control unit CU,
- e) returning the measurement results $\vec{d}$ as output randomness,
- f) returning the min-entropy $H_{min}(\vec{d}|\vec{x})$ as an outcome of a self-test,
- g) repeating the step a-f.

8. The method according to claim 7, wherein the method for self-testing further comprises steps of:

- recording by the control unit CU the values of $\vec{d}$ and $\vec{x}$ from $N_0$ steps, where $N_0$ is a free parameter,
- estimating by the control unit CU an observed probability distribution using formula:

$$p(\vec{d}|\vec{x}) = \frac{\sum_{i=1}^{N_0} \delta(\vec{d}, \vec{d}_i)\delta(\vec{x}, \vec{x}_i)}{\sum_{i=1}^{N_0} \delta(\vec{x}, \vec{x}_i)},$$

- using by the control unit CU well-known linear or semi-definite programmingalgorithms to find the minimum value of min-entropy $H_{min}(\vec{d}|\vec{x})$, which is compatible with the observed value of $p(\vec{d}|\vec{x})$,
- returning by the control unit CU the value of $H_{min}(\vec{d}|\vec{x})$,

where $\delta(a, b)$ is Kronecker's function equal to 1 if $a = b$ and 0 otherwise.

9. The method according to claim 7, wherein the control unit CU generates a string of random numbers while postprocess it a with well-known method of randomness extraction, which takes as an input $\vec{d}$ and $H_{min}(\vec{d}|\vec{x})$, and produces the sting of random numbers with arbitrary quality $\vec{r}$, then it returns $\vec{r}$ instead of $\vec{d}$ as the generated string of random numbers.

**Patentansprüche**

1. Selbsttestender Quantenzahlengenerator, insbesondere für Lotterien und Glücksspiele, umfassen:

- ein Interferometer, bestehend aus:

- eine Signalquelle S, die zur Erzeugung eines Signals konfiguriert ist,
- mindestens zwei Wege, die das Signal durchläuft,
- Komponenten A, die die Eigenschaften des Signals verändern können,
- ein Interferenzgebiet I,
- Detektoren $D$,

- eine Steuereinheit CU, wobei

- die Steuereinheit CU ist mit der Signalquelle S verbunden, wobei das Signal eine Störeigenschaft aufweist,
- **dadurch gekennzeichnet, dass** die Detektoren D so konfiguriert sind, dass sie eine Signalintensität messen und die Messergebnisse $\vec{d}$ über elektrische Drähte an die Steuereinheit CU zu senden,
- Komponenten $A$ werden von der Steuereinheit CU über elektrische Leitungen mit den Parametern $\vec{x}$,
- die Quelle S so konfiguriert ist, dass sie ein Signal erzeugt, wenn sie von der Steuereinheit CU über elektrische Drähte angefordert wird,
- die Steuereinheit CU führt auf der Grundlage der Messergebnisse einen Selbsttest durch $\vec{d}$ durch und liefert das Ergebnis $H_{min}(\vec{d}|\vec{x})$,

die Kontrolleinheit CU liefert Zufallszahlen $\vec{d}$ zurück, wobei: $\vec{x}$ ein Vektor ist, der die Parameter für alle Komponenten $A$, $\vec{d}$ ein Vektor ist, der die Messergebnisse der Detektoren D darstellt, $H_{min}(\vec{d}|\vec{x})$ eine untere Schranke für die durchschnittliche Min-Entropie der Kette von $N_0$ Werte von $\vec{d}$, gegeben durch die Formel $H_{min}(\vec{d}|\vec{x}) = -log_2 \max_{\vec{k}} p(\vec{d} = \vec{k}|\vec{x})$ and $N_0$ ist ein freier Parameter.

2. Selbsttestender Quantenzahlgenerator nach Anspruch 1, der ein Interferometer beliebiger Bauart umfasst, das durch Hinzufügen zusätzlicher Komponenten B

3. Selbsttestender Quantenzahlgenerator nach Anspruch 1, mit einem Interferometer beliebiger Bauart, das durch Hinzufügen zusätzlicher Komponenten B und zusätzlicher Detektoren D' modifiziert ist

4. Selbsttestender Quantenzahlengenerator nach Anspruch 1, bestehend aus einem Mach-Zehnder-Interferometer, modifiziert durch Hinzufügen zusätzlicher Komponenten B.

5. Selbsttestender Quantenzahlgenerator nach Anspruch 1, bestehend aus einem Mach-Zehnder-Interferometer, das durch Hinzufügen zusätzlicher Komponenten B und Detektoren D' modifiziert ist.

6. Selbsttestender Quantenzahlengenerator nach Anspruch 1, wobei die Eingaben $\vec{x}$ von der Steuereinheit CU aus der zuvor erzeugten Zufälligkeit erzeugt werden oder die Steuereinheit CU sie als Eingabe von einer externen Quelle erhält.

7. Verfahren zur Selbstprüfung der Quantenzahlerzeugung einer Reihe von Zufallszahlen in einem Generator, insbesondere bei Lotterien und Glücksspielen, umfassen:

    - a) Anforderung eines zu erzeugenden Signals mit einer Störeigenschaft durch eine Steuereinheit CU von der Signalquelle S,
    - b) Senden von CU-Parametern durch die Steuereinheit $\vec{x}$ an die Komponenten A, die die Eigenschaften des Signals verändern
    - c) Übertragen des Signals von der Quelle S über die Komponenten A zum Interferenzbereich I und zu den Detektoren D, wobei das Signal mindestens zwei Wege durchläuft,
    - d) Messung der Signalintensitäten durch die Detektoren D und Übermittlung der Messergebnisse $\vec{d}$ an die Steuereinheit CU,
    - e) Rückgabe der Messergebnisse $\vec{d}$ als zufällige Ausgabe,
    - f) Rückgabe der Min-Entropie $H_{min}(\vec{d}|\vec{x})$ als Ergebnis eines Selbsttests,
    - g) Wiederholung der Schritte a-f.

8. Verfahren nach Anspruch 7, wobei das Verfahren zur Selbstprüfung ferner die folgenden Schritte umfasst:

    - die Aufzeichnung der Werte von CU durch die Steuereinheit $\vec{d}$ und $\vec{x}$ von $N_0$ Schritten, wobei $N_0$ ein freier Parameter ist,
    - Schätzung einer beobachteten Wahrscheinlichkeitsverteilung durch die Steuereinheit CU anhand einer Formel:

$$p(\vec{d}|\vec{x}) = \frac{\sum_{i=1}^{N_0} \delta(\vec{d}, \vec{d}_i)\delta(\vec{x}, \vec{x}_i)}{\sum_{i=1}^{N_0} \delta(\vec{x}, \vec{x}_i)},$$

    - Verwendung bekannter linearer oder halbdefiniter Programmieralgorithmen durch die Steuereinheit CU, um den Mindestwert der Min-Entropie zu finden $H_{min}(\vec{d}|\vec{x})$ zu finden, der mit dem beobachteten Wert von $p(\vec{d}|\vec{x})$,
- die von der Steuereinheit CU den Wert von $H_{min}(\vec{d}|\vec{x})$,

wobei $\delta(a, b)$ eine Kronecker-Funktion ist, die gleich 1 ist, wenn $a = b$ und 0 andernfalls.

**9.** Verfahren nach Anspruch 7, bei dem die Steuereinheit CU eine Folge von Zufallszahlen erzeugt, während sie diese mit einem bekannten Verfahren zur Extraktion von Zufälligkeiten nachbearbeitet, das als Eingabe nimmt $\vec{d}$ und $H_{min}(\vec{d}|\vec{x})$ nimmt und die Folge von Zufallszahlen mit beliebiger Qualität erzeugt $\vec{r}$ erzeugt, dann gibt sie $\vec{r}$ anstelle von $\vec{d}$ als die erzeugte Zufallszahlenfolge zurück.

**Revendications**

**1.** Générateur de nombres quantiques autotesté, notamment pour les loteries et les jeux, comprenant :

- un interféromètre comprenant

- une source de signal S configurée pour produire un signal,
- au moins deux chemins par lesquels le signal passe,
- les composants A qui peuvent modifier les propriétés du signal,
- une région d'interférence I,
- détecteurs $D$,

- une unité de commande CU, dans laquelle
- l'unité de commande CU est connectée à la source de signal S, le signal ayant une propriété d'interférence,
- **caractérisé par le fait que** les détecteurs D sont configurés pour mesurer l'intensité d'un signal et envoyer les résultats de la mesure, via des fils électriques, à l'unité de commande CU. $\vec{d}$ par l'intermédiaire de fils électriques à l'unité de commande CU,
- sont commandés par l'unité de commande CU $A$ sont contrôlés par l'unité de commande CU par l'intermédiaire de fils électriques avec des paramètres $\vec{x}$,
- la source S est configurée pour produire un signal à la demande de l'unité de commande CU par l'intermédiaire de fils électriques,
- l'unité de contrôle CU effectue un auto-test sur la base des résultats de mesure $\vec{d}$ et renvoie son résultat $H_{min}(\vec{d}|\vec{x})$,

l'unité de contrôle CU renvoie des nombres aléatoires $\vec{d}$ où : $\vec{x}$ est un vecteur représentant les paramètres pour tous les composants $A$, $\vec{d}$ est un vecteur représentant les résultats des mesures des détecteurs D, $H_{min}(\vec{d}|\vec{x})$ est une limite inférieure de l'entropie minimale moyenne de la chaîne de $N_0$ valeurs de $\vec{d}$ donnée par la formule $H_{min}(\vec{d}|\vec{x}) = -log_2 \max_{\vec{k}} p(\vec{d} = \vec{k}|\vec{x})$ and $N_0$ est un paramètre libre.

**2.** Le générateur de nombres quantiques autotesté selon la revendication 1, comprenant un interféromètre de n'importe quelle conception modifiée par l'ajout de composants supplémentaires B.

**3.** Le générateur de nombres quantiques autotesté selon la revendication 1, comprenant un interféromètre de conception quelconque modifié par l'ajout de composants supplémentaires B et de détecteurs supplémentaires D'

**4.** Le générateur de nombres quantiques autotesté, selon la revendication 1, comprenant un interféromètre de Mach-Zehnder, modifié par l'ajout de composants supplémentaires B.

**5.** Le générateur de nombres quantiques autotesté, selon la revendication 1, comprend un interféromètre de Mach-Zehnder, modifié par l'ajout de composants supplémentaires B et de détecteurs D'.

**6.** Le générateur de nombres quantiques autotesté, selon la revendication 1, dans lequel les entrées $\vec{x}$ sont générées par l'unité de contrôle CU à partir du hasard généré précédemment ou l'unité de contrôle CU le reçoit en tant qu'entrée d'une source externe.

7. Méthode d'auto-test de la génération de nombres quantiques d'une chaîne de nombres aléatoires dans un générateur, en particulier dans les loteries et les jeux de hasard, comprenant les étapes suivantes :

- a) une unité de commande CU demande à la source de signal S un signal ayant une propriété d'interférence à produire,
- b) l'envoi par l'unité de commande des paramètres CU $\vec{x}$ aux composants A qui modifient les propriétés du signal
- c) transfert du signal de la source S, via les composants A, à la zone d'interférence I et aux détecteurs D, le signal empruntant au moins deux chemins,
- d) mesurer l'intensité des signaux par les détecteurs D et envoyer les résultats de la mesure $\vec{d}$ à l'unité de contrôle CU,
- e) renvoyer les résultats de la mesure $\vec{d}$ en tant qu'aléa de sortie,
- f) renvoyer l'entropie minimale $H_{min}(\vec{d}|\vec{x})$ comme résultat d'un auto-test,
- g) répéter les étapes a-f.

8. La méthode selon la revendication 7, dans laquelle la méthode d'autodiagnostic comprend en outre les étapes suivantes :

- l'enregistrement par l'unité de contrôle CU des valeurs de $\vec{d}$ et $\vec{x}$ à partir de $N_0$ étapes, où $N_0$ est un paramètre libre,
- l'estimation par l'unité de contrôle CU d'une distribution de probabilité observée à l'aide d'une formule :

$$p(\vec{d}|\vec{x}) = \frac{\sum_{i=1}^{N_0} \delta(\vec{d}, \vec{d}_i)\delta(\vec{x}, \vec{x}_i)}{\sum_{i=1}^{N_0} \delta(\vec{x}, \vec{x}_i)},$$

- en utilisant par l'unité de contrôle CU des algorithmes de programmation linéaire ou semi-définie bien connus pour trouver la valeur minimale de min-entropie $H_{min}(\vec{d}|\vec{x})$ compatible avec la valeur observée de $p(\vec{d}|\vec{x})$,
- retour par l'unité de contrôle CU de la valeur de $H_{min}(\vec{d}|\vec{x})$,

où $\delta(a, b)$ est la fonction de Kronecker, égale à 1 si $a = b$ et 0 dans le cas contraire.

9. La méthode selon la revendication 7, dans laquelle l'unité de contrôle CU génère une chaîne de nombres aléatoires tout en la post-traitant à l'aide d'une méthode bien connue d'extraction d'aléa, qui prend comme entrée $\vec{d}$ et $H_{min}(\vec{d}|\vec{x})$ et produit la chaîne de nombres aléatoires avec une qualité arbitraire $\vec{r}$ puis elle renvoie $\vec{r}$ au lieu de $\vec{d}$ comme chaîne de nombres aléatoires générée.

Fig. 1

Fig. 2a

Fig. 2b

Fig. 2c

Fig. 3

Fig .4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1821196 A
- EP 1447740 A
- EP 3040853 A
- US 2015227343 A
- WO 2018065593 A
- US 2019393675 A

### Non-patent literature cited in the description

- **CH VINCENT.** The generation of truly random binary numbers. *J. Physics E,* 1970, vol. 3 (6), 594-598
- **DAVIDE RUSCA ; THOMAS VAN HIMBEECK ; ANTHONY MARTIN ; JONATAN BOHR BRASK ; WEIXU SHI ; STEFANO PIRONIO ; NICOLAS BRUNNER ; HUGO ZBINDEN.** *Practical self-testing quantum random number generator based on an energy bound,* 2019
- **ANATOLY KULIKOV ; MARKUS JERGER ; ANTON POTOČNIK ; ANDREAS WALLRAFF ; ARKADY FEDOROV.** Realization of a Quantum Random Generator Certified with the Kochen-Specker Theorem. *Phys. Rev. Lett,* 2017, vol. 119, 240501
- **DAVIDE G. MARANGON ; GIUSEPPE VALLONE ; PAOLO VILLORESI.** Source-Device-Independent Ultrafast Quantum Random Number Generation. *Phys. Rev. Lett.,* 2017, vol. 118, 060503